# EUROPÄISCHE PATENTSCHRIFT

(11) **EP 2 926 394 B1**
(45) Veröffentlichungstag und Bekanntmachung des Hinweises auf die Patenterteilung: **28.09.2016**
(21) Anmeldenummer: 14700053.3
(22) Anmeldetag: 02.01.2014
(51) Int. Cl.: H01M 4/36, H01M 12/08, H01M 4/38, H01M 4/02

(54) **WIEDERAUFLADBARER ELEKTRISCHER ENERGIESPEICHER**
RECHARGEABLE ELECTRICAL ENERGY STORE
ACCUMULATEUR D'ÉNERGIE ÉLECTRIQUE RECHARGEABLE

(30) Priorität: 18.01.2013 DE 102013200759
(43) Veröffentlichungstag der Anmeldung: 07.10.2015
(73) Patentinhaber: Siemens Aktiengesellschaft, 80333 München (DE)
(72) Erfinder: COLOGNA, Marco, 81825 München (DE); LANDES, Harald, 90607 Rückersdorf (DE); SCHUH, Carsten, 85598 Baldham (DE); SOLLER, Thomas, 94405 Landau/Isar (DE)
(86) Internationale Anmeldenummer: PCT/EP2014/050028
(87) Internationale Veröffentlichungsnummer: WO 2014/111277

(56) Entgegenhaltungen:
- WO-A2-2006/050190
- DE-A1-102009 057 718

## Beschreibung

Die Erfindung betrifft einen wiederaufladbaren elektrischen Energiespeicher, insbesondere einen Metall-Luft-Energiespeicher, mit wenigstens einem Speicherelement zur Speicherung elektrischer Energie, wobei das Speicherelement einen porösen Speicherelementkörper umfasst.

Es sind verschiedene technische Lösungen für die Speicherung überschüssiger elektrischer Energie, die beispielsweise durch erneuerbare Energiequellen oder durch Kraftwerke erzeugt wird und für welche temporär kein Bedarf besteht, bekannt. Ein neues Beispiel für eine Speichermöglichkeit überschüssiger elektrischer Energie ist die Verwendung von wiederaufladbaren elektrischen Energiespeichern in Form von Metall-Luft-Energiespeichern bzw. Metall-Luftbatterien (engl. Rechargeable Oxide Battery, kurz ROB).

Metall-Luftbatterien werden üblicherweise bei Temperaturen zwischen 600 und 900°C betrieben. Das Funktionsprinzip von Metall-Luftbatterien besteht darin, einer (positiven) Luftelektrode Sauerstoff zuzuführen und dort in Sauerstoffionen umzuwandeln. Die Sauerstoffionen wandern durch einen Festkörperelektrolyten zu einer der Luftelektrode gegenüberliegend angeordneten (negativen) Elektrode (Entladevorgang). Umgekehrt ist es möglich, dass die Sauerstoffionen von der (negativen) Elektrode durch den Festkörperelektrolyten zu der (positiven) Luftelektrode wandern (Ladevorgang).

An der negativen Elektrode findet, je nachdem, ob ein Lade- oder Entladevorgang stattfindet, eine Reaktion der Sauerstoffionen mit einem gasförmigen Redoxpaar statt, wobei der von dem gasförmigen Redoxpaar aufgenommene oder abgegebene Sauerstoff durch Diffusion des Redoxpaares auf ein poröses, gasdurchlässiges und ebenfalls oxidierbares bzw. reduzierbares Speichermaterial bzw. Speicherelement übertragen wird. Aufgrund der z.B. für den Sauerstofftransport in einem keramischen Festkörperelektrolyten benötigten hohen Temperaturen ist die Werkstoffauswahl für die Konstruktion der Komponenten eines entsprechenden Energiespeichers, insbesondere des Speicherelements, sowie die Anordnung des Speicherelements innerhalb des Energiespeichers komplex.

Insbesondere nehmen die nutzbare Speicherkapazität des Energiespeichers und damit die Speicherdichte nach mehreren Redoxzyklen im Rahmen von Lade- und Entladevorgängen bei den besagten Betriebstemperaturen ab. Für eine wirtschaftliche Nutzung eines Energiespeichers ist daher grundsätzlich eine Erhöhung der initialen Speicherdichte pro Volumeneinheit des Energiespeichers anzustreben.

Ein Energiespeicher aus dem Stand der Technik wird in DE 10 2009 057 718 A1 offenbart.

Der Erfindung liegt das Problem zugrunde, einen wiederaufladbaren elektrischen Energiespeicher mit einem, insbesondere im Hinblick auf Langzeitstabilität und Speicherdichte, verbesserten Speicherelement anzugeben.

Das Problem wird erfindungsgemäß durch einen wiederaufladbaren elektrischen Energiespeicher der eingangs genannten Art gelöst, welcher sich dadurch auszeichnet, dass in dem Speicherelementkörper wenigstens ein Durchgangskanal ausgebildet ist, wobei die den Durchgangskanal begrenzenden Wandabschnitte des Speicherelementkörpers zumindest abschnittsweise mit einem, insbesondere einem dichten bzw. kompakten oder zumindest abschnittsweise porösen, elektrisch leitfähigen Material beschichtet sind.

Die Erfindung schlägt einen neuartigen Aufbau eines wiederaufladbaren elektrischen Energiespeichers, im Weiteren kurz als Energiespeicher bezeichnet, bzw. insbesondere eines einem Energiespeicher zugehörigen Speicherelements vor. Dabei sind in dem porösen, d. h. im Wesentlichen aus einem partikelförmigen Speichermaterial gebildeten Speicherelementkörper ein oder mehrere Durchgangskanäle ausgebildet. Die Durchgangskanäle durchbrechen die poröse Struktur des Speicherelementkörpers etwa im Sinne einer Bohrung und unterscheiden sich demnach insbesondere in den geometrischen Abmessungen, wie z. B. Durchmesser und/oder Länge, sowie der Form von in dem Speicherelementkörper aufgrund dessen poröser Struktur möglicherweise bereits vorhandenen kanalartigen Strukturen. Letztere können gegebenenfalls als Mikrokanäle, die Durchgangskanäle entsprechend als Makrokanäle bezeichnet werden.

Die Durchgangskanäle ermöglichen einerseits einen einfachen und schnellen Gastransport, insbesondere eines für den Betrieb des Energiespeichers erforderlichen redoxaktiven Gasgemisches ("Redox-Shuttle"), wie z. B. eines gasförmigen Redoxpaars in Form eines Wasserstoff-Wasserdampf-Gasgemischs, durch den Speicherelementkörper. Dies ist durch die geometrischen Abmessungen der Durchgangskanäle bedingt, welche den Speicherelementkörper, wie erwähnt, im Sinne von Bohrungen oder ähnlichen Durchbrechungen, durchsetzen. Die Möglichkeit eines einfachen und schnellen Gastransports durch den Speicherelementkörper erlaubt die Ausbildung von im Vergleich zu konventionellen Speicherelementkörpern dickeren Speicherelementkörpern, was der mechanischen Stabilität des Speicherelements sowie der Speicherdichte und damit Leistungs- bzw. Energiedichte des Energiespeichers insgesamt zuträglich ist.

Durch die zumindest abschnittsweise, insbesondere vollständige, Beschichtung der den Durchgangskanal begrenzenden Wandabschnitte bzw. Wandungen des Speicherelementkörpers mit einem elektrisch leitfähigen Material ist es möglich, eine elektrische Kontaktierung zwischen angrenzend bzw. benachbart angeordneten Komponenten des Energiespeichers, wie z. B. einer Elektrode und eines zur Verbindung des Energiespeichers mit wenigstens einem weiteren wiederaufladbaren elektrischen Energiespeicher ausgebildeten elektrischen Verbindungselements (Interkonnektorplatte), zu realisieren.

Die elektrisch leitfähige Beschichtung ist bevorzugt zumindest abschnittsweise porös ausgebildet, um den ungehinderten

Durchtritt des Redoxpaares von den Durchgangskanälen in, insbesondere Mikrokanäle aufweisende, Struktur des Speichermaterials zu gewährleisten.

Das die Beschichtung der Wandabschnitte bildende elektrisch leitfähige Material ist bevorzugt aus einem metallischen Material, insbesondere einem Elementarmetall, bevorzugt Cr, Co, Ni, Cu, Ag, oder einer Metalllegierung, bevorzugt auf Basis von Cr, Co, Cu, Ni, Ag oder Fe, besonders bevorzugt X1CrTiLa22, FeCr22, 1C44Mo20, oder einer elektrisch leitfähigen Oxidverbindung, insbesondere auf Basis von Cr₂O₃, In₂O₃, MnₓO_{y} oder TiO₂ oder einer Perowskitverbindung, bevorzugt der allgemeinen Form (RE,AE)(Fe, Ti, Cr, Mn, Ni)O₃, besonders bevorzugt aus den Kompositionsfeldern (Sr, Y)TiO₃ oder (La, Ca, Sr, Ce)(Fe, Ti, Cr)O₃, oder einer Mischung der Genannten gebildet. Die Aufzählung ist lediglich beispielhaft und nicht abschließend, das die Beschichtung bildende Material kann grundsätzlich auch aus Anderen als den genannten Materialien gebildet sein. Besonders vorteilhaft ist es, wenn das die Beschichtung bildende Material, falls es sich um ein Metall handelt, edler ist als das Speichermaterial des Speicherelements, damit es gegenüber den chemischen Bedingungen während des Ladens bzw. Entladens des Energiespeichers inert ist.

Die Ausbildung der Durchgangskanäle in dem Speicherelementkörper kann beispielsweise durch Einbringen von organischen Fasernetzen, insbesondere Polymerfasernetzen, und/oder von perkolierenden organischen Fasern, insbesondere Polymerfasern, wie z. B. Kohlenstofffasern, und/oder von organischen bzw. organisch basierten Porenbildnern in das den Speicherelementkörper bildende Speichermaterial im Rahmen der Herstellung des Speicherelementkörpers erfolgen. Die vorgenannten organischen bzw. organisch basierten Stoffe können durch die erhöhten Temperaturen während des Herstellens, d. h. insbesondere Entbinderns zur Entfernung von Bindermaterial und Sinterns, des Speicherelementkörpers ausgebrannt und somit aus dem Speicherelementkörper entfernt werden, wodurch es zu der Ausbildung der Durchgangskanäle kommt. Zur Ausbildung der Durchgangskanäle ist auch ein Gefrier-Gelieren (engl. freeze casting) oder die Entfernung der organischen Bestandteile durch geeignete Lösungsmittel denkbar.

Die zumindest abschnittsweise, insbesondere vollständige, Beschichtung der den Durchgangskanal begrenzenden Wandabschnitte des Speicherelementkörpers mit einem elektrisch leitfähigen Material kann beispielsweise durch ein Beschichten mit pulverbasierten, wenigstens ein elektrisch leitfähiges Material zur Bildung der Beschichtung enthaltenden Schlickern erfolgen. Denkbar ist auch eine Beschichtung der den Durchgangskanal begrenzenden Wandabschnitte über Beschichtungsverfahren aus dem Bereich der Sol-Gel-Prozesse sowie über physikalische oder chemische Gasphasenabscheidung. Alternativ ist eine (Druck-)Infiltration des, gegebenenfalls vorgesinterten, Speicherelementkörpers mit pulverbasierten, wenigstens ein elektrisch leitfähiges Material oder Vorstufen davon zur Bildung der Beschichtung enthaltenden Schlickern oder Solen denkbar. Die Beschichtung kann ferner über elektrophoretische Abscheidung aufgebracht werden.

Zweckmäßig erstreckt sich der wenigstens eine Durchgangskanal von wenigstens einer Fläche des Speicherelementkörpers wenigstens bis zu einer dieser gegenüber liegenden Fläche des Speicherelementkörpers. Es ist vorteilhaft, wenn der Durchgangskanal den Speicherelementkörper dabei vollständig durchsetzt, sich also vollständig von der einen Fläche bzw. Oberfläche des Speicherelementkörpers bis zu einer dieser gegenüber liegenden Fläche bzw. Oberfläche des Speicherelementkörpers erstreckt. Gleiches gilt im Falle von mehreren Durchgangskanälen, so dass es auch hier vorteilhaft ist, dass diese den Speicherelementkörper jeweils vollständig durchsetzen.

Erfindungsgemäß ist das Speicherelement zwischen einer Elektrode und einem zum Verbinden des wiederaufladbaren elektrischen Energiespeichers mit einem weiteren wiederaufladbaren elektrischen Energiespeicher ausgebildeten elektrischen Verbindungselement (Interkonnektorplatte) angeordnet, wobei der wenigstens eine Durchgangskanal den Speicherelementkörper von der der Elektrode zugewandten Oberfläche bis zu der dem elektrischen Verbindungselement zugewandten Oberfläche durchsetzt. Gleiches gilt im Falle von mehreren Durchgangskanälen, so dass diese den Speicherelementkörper jeweils vollständig von der der Elektrode zugewandten Fläche bzw. Oberfläche bis zu der dem elektrischen Verbindungselement zugewandten Fläche bzw. Oberfläche durchsetzen.

Es ist denkbar, dass der Durchmesser des wenigstens einen Durchgangskanals entlang dessen Erstreckung konstant ist oder sich, insbesondere graduell, ändert.

Wie erwähnt, können in dem Speicherelementkörper mehrere Durchgangskanäle ausgebildet sein. Einzelne oder mehrere der Durchgangskanäle können zumindest teilweise miteinander kommunizieren, wobei die miteinander kommunizierenden Durchgangskanäle ein zwei- oder dreidimensionales, sich durch den Speicherelementkörper zumindest abschnittsweise erstreckendes Netzwerk bilden können.

In Weiterbildung der Erfindung können in dem Speicherelement bzw. dem Speicherelementkörper zusätzlich Partikel aus einem inerten Material, insbesondere einer Oxidverbindung, insbesondere auf Basis von Zirkonium und/oder Yttrium, enthalten sein. Diese Partikel wirken im Sinne von "Abstandshaltern" zwischen den Partikeln des in dem Speicherelementkörper enthaltenen Speichermaterials und verhindern deren Verbindung bzw. Versinterung. Derart ist es möglich, eine auf die Verbindung bzw. Versinterung des partikelförmigen Speichermaterials zurückzuführende Reduzierung der Mikroporosität und damit der mikroskopischen Gasdurchlässigkeit des Speichervolumens zu verhindern.

Das Speicherelement ist, wie erwähnt, in der Regel zwischen einer Elektrode und einem zum Verbinden des wiederaufladbaren elektrischen Energiespeichers mit einem weiteren wiederaufladbaren elektrischen Energiespeicher ausgebildeten elektrischen Verbindungselement (Interkonnektorplatte) angeordnet. Es ist hier vorteilhaft möglich, dass zumindest auf der der Elektrode oder der Interkonnektorplatte zugewandten Fläche bzw. Oberfläche des Speicherelements zumindest abschnittsweise, insbesondere vollflächig, eine elektrisch leitfähige Kontaktschicht aufgebracht ist.

Die Kontaktschicht dient der Homogenisierung bzw. Glättung der ansonsten aufgrund der zellularen bzw. porösen Struktur ungleichmäßigen Oberflächenleitfähigkeit des Speicherelements und der negativen Elektrode einerseits und einer aus dem Herstellungsprozess herrührenden Restwelligkeit der Oberfläche des Speicherelements, der negativen Elektrode und der Interkonnektorplatte andererseits. Die Kontaktschicht passt sich der Oberfläche des Speicherelements bzw. der Elektrode bzw. der Interkonnektorplatte an und liegt im Sinne einer elektrisch leitfähigen Schicht auf der Oberfläche des Speicherelements. Die Kontaktschicht ist aus einem elektrisch leitfähigen Material gebildet und trägt so zu einer Reduzierung der Kontaktwiderstände zwischen dem Speicherelement und den an dieses angrenzenden Komponenten des Energiespeichers bei. Insbesondere ist die Kontaktschicht aus einem elastisch bzw. plastisch verformbaren elektrisch leitfähigen Material gebildet. Außerdem ist die Kontaktschicht vorzugsweise porös, um einen Transport eines gasförmigen Redoxpaares durch das Speicherelement weder zu behindern noch zu unterbinden.

Die Kontaktschicht ist in ihren Eigenschaften, insbesondere im Hinblick auf ihre elektrische Leitfähigkeit derart stabil, dass sich im Betrieb des Energiespeichers keine (wesentlichen) Veränderungen bzw. Wechselwirkungen mit an diese angrenzenden bzw. diese kontaktierenden Komponenten des Energiespeichers ergeben. Falls es zu chemischen Reaktionen mit Kontaktpartnern kommt, müssen deren Reaktionsprodukte ebenfalls ausreichend elektrisch leitfähig sein.

Eine entsprechende Kontaktschicht kann an allen Flächen bzw. Oberflächen des Speicherelements vorgesehen sein. Bevorzugt ist die Kontaktschicht an wenigstens einer Fläche bzw. Oberfläche des Speicherelements vorgesehen, welche an eine weitere Komponente des Energiespeichers in Stapelrichtung angrenzt.

Grundsätzlich sollte die Kontaktschicht, zumindest die auf der der Elektrode zugewandten Fläche bzw. Oberfläche des Speicherelements aufgebrachte elektrisch leitfähige Kontaktschicht eine poröse Struktur aufweisen. Derart ist ein für den Betrieb des Energiespeichers wesentlicher Stoff- bzw. Gasdurchtritt durch die Kontaktschicht und somit ein Stoff- bzw. Gasaustausch zwischen der Elektrode und dem Speicherelement sichergestellt.

Die elektrisch leitfähige Kontaktschicht ist zweckmäßig aus demselben Material wie die Beschichtung der den Durchgangskanal begrenzenden Wandungen des Speicherelementkörpers gebildet. Hierdurch ergeben sich in vorteilhafter Weise gleiche oder zumindest ähnliche thermo-mechanische, chemische und elektrische Eigenschaften der Kontaktschicht und der Beschichtung, so dass hier insbesondere keine die elektrischen Eigenschaften des Speicherelements negativ beeinflussende Reaktions-Grenzschicht gebildet wird.

Die elektrisch leitfähige Kontaktschicht ist demnach zweckmäßig aus einem metallischen Material, insbesondere einem Elementarmetall, bevorzugt Cr, Co, Ni, Cu, Ag, oder einer Metalllegierung, bevorzugt auf Basis von Cr, Co, Cu, Ni, Ag oder Fe, besonders bevorzugt X1CrTiLa22, FeCr22, 1C44Mo20, oder einer elektrisch leitfähigen Oxidverbindung, insbesondere auf Basis von Cr₂O₃, In₂O₃, MnₓO_{y} oder TiO₂ oder einer Perowskitverbindung, bevorzugt der allgemeinen Form (RE,AE)(Fe, Ti, Cr, Mn, Ni)O₃, besonders bevorzugt aus den Kompositionsfeldern (Sr, Y)TiO₃ oder (La, Ca, Sr, Ce)(Fe, Ti, Cr)O₃, oder einer Mischung der Genannten gebildet.

Die Erfindung betrifft ferner eine Energiespeicheranordnung, umfassend mehrere, insbesondere stapelartig, miteinander verbundene, wiederaufladbare elektrische Energiespeicher, wie vorstehend beschrieben. Die Energiespeicheranordnung kann auch als "Stack" bezeichnet werden.

Dementsprechend gelten sämtliche Ausführungen zu dem erfindungsgemäßen wiederaufladbaren elektrischen Energiespeicher analog für die erfindungsgemäße Energiespeicheranordnung.

Weitere Merkmale und weitere vorteilhafte Ausgestaltungsformen der Erfindung sind anhand der folgenden Figuren näher erläutert. Hierbei handelt es sich lediglich um beispielhafte Ausgestaltungsformen, die keine Einschränkung des Schutzumfangs darstellen. Dabei zeigen:
- Figur 1: eine schematische Darstellung eines wiederaufladbaren elektrischen Energiespeichers,
- Figur 2: einen Querschnitt durch einen Energiespeicher und
- Figur 3: einen vergrößerten Ausschnitt eines ein Speicherelement umfassenden Energiespeichers.

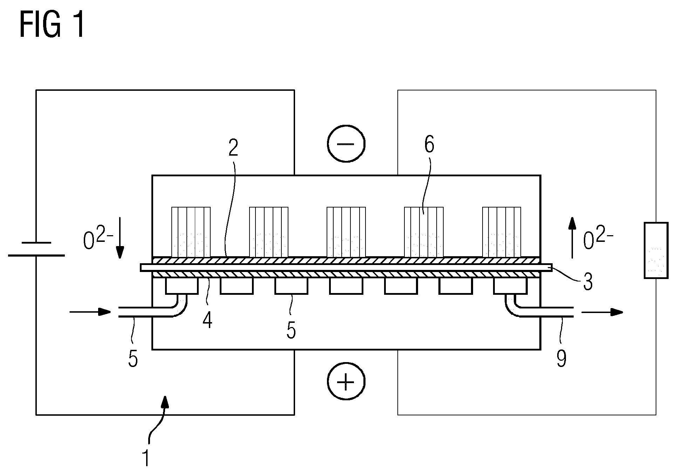

Figur 1 zeigt eine schematische Darstellung eines wiederaufladbaren elektrischen Energiespeichers 1, welcher als Metall-Luft-Energiespeicher ausgebildet ist. Auf Grundlage von Figur 1 soll zunächst der Aufbau bzw. die Funktionsweise des Energiespeichers 1 beschrieben werden.

Der Aufbau des Energiespeichers 1 umfasst eine negative, d. h. negativ geladene, Elektrode 2, einen, insbesondere als Festkörperelektrolyten ausgebildeten, Elektrolyten 3 sowie eine positive, d. h. positiv geladene, Elektrode 4. Die positive Elektrode 4 kann als Luftelektrode, die negative Elektrode 2 als Speicherelektrode bezeichnet werden.

Über eine Luftzufuhr 5 wird Luft als ein Sauerstoff enthaltendes Prozessgas zugeführt. Der in dem Prozessgas enthaltene Sauerstoff wird in Sauerstoffionen (O²⁻-Ionen) umgewandelt und wandert von der positiven Elektrode 4 durch den Elektrolyten 3 zu der negativen Elektrode 2.

Die negative Elektrode 2 steht über ein gasförmiges Redoxpaar, etwa in Form eines Wasserstoff-Wasserdampf-Gemisches (H₂/H₂O-Gemisch), mit einem ein redoxaktives Speichermaterial, etwa ein Eisen-Eisenoxid-Gemisch, aufweisenden Speicherelement 6 zur Speicherung elektrischer Energie in Verbindung.

Die durch den Elektrolyten 3 gewanderten Sauerstoffionen vereinigen sich unter Abgabe von zwei Elektronen an der negativen Elektrode 2 mit Wasserstoff zu Wasserdampf und diffundieren in dieser Form durch das poröse Speicherelement 6. Je nachdem, ob ein Entlade- oder Ladevorgang des Energiespeichers 1 gegeben ist, wird das Speichermaterial oxidiert oder reduziert, wobei der gegebenenfalls notwendige bzw. gebildete Sauerstoff durch das als Redoxpaar dienende Wasserstoff-Wasserdampf-Gemisch bereitgestellt oder abgeführt werden kann. Der Mechanismus des Sauerstofftransports über ein Redoxpaar wird als Shuttlemechanismus bezeichnet.

Der Vorteil der Verwendung eines Eisen-Eisenoxid-Gemisches als Speichermaterial des Speicherelements 6 liegt darin, dass Eisen bei seinem Oxidationsprozess in etwa dieselbe Ruhespannung von etwa 1 V aufweist, wie das als Redoxpaar dienende Wasserstoff-Wasserdampf-Gemisch bei einem Partialdruckverhältnis von 1, andernfalls ergibt sich ein erhöhter Widerstand für den Sauerstofftransport durch die Komponenten des Redoxpaares, d. h. des Wasserstoff-Wasserdampf-Gemisches.

Die Diffusion bzw. Migration der Sauerstoffionen durch den Elektrolyten 3 und deren Umsatz an den Elektroden 2, 4 und im Speichermaterial 15 benötigt eine Betriebstemperatur des Energiespeichers 1 von 600 bis 900°C. Gleichermaßen sind Temperaturen von 600 bis 900°C für eine optimale Zusammensetzung des Wasserstoff-Wasserdampf-Gemisches im Gleichgewicht mit dem Speichermaterial des Speicherelements 6 vorteilhaft. Durch die hohen Betriebstemperaturen des Energiespeichers 1 sind sämtliche Komponenten des Energiespeichers 1, d. h. insbesondere die Elektroden 2, 4 und der Elektrolyt 3, wie auch das Speicherelement 6 hohen thermischen Belastungen ausgesetzt.

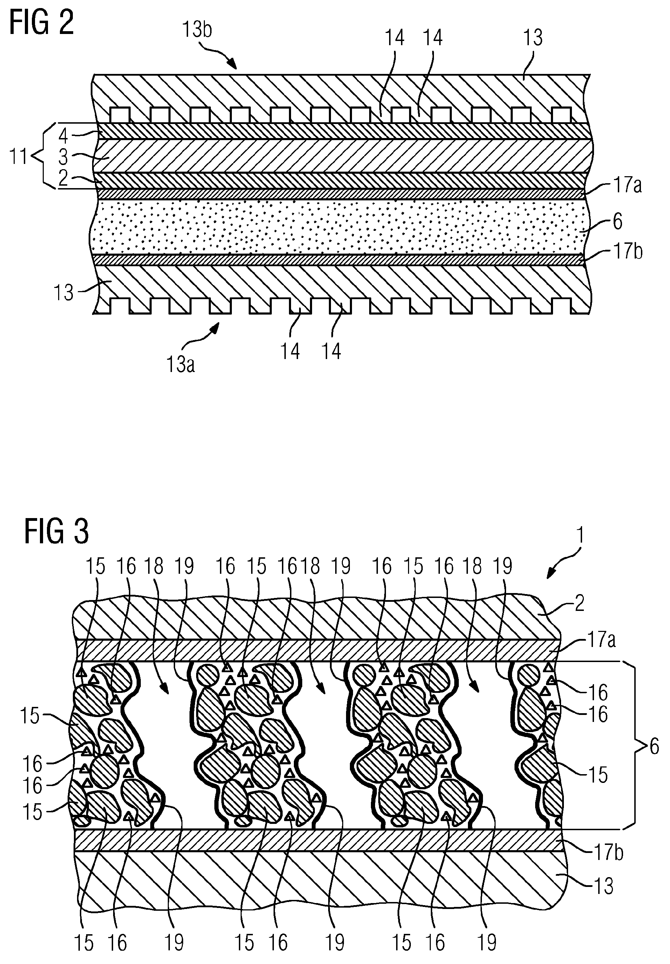

Figur 2 zeigt einen Querschnitt durch einen Energiespeicher 1. Von oben nach unten betrachtet umfasst der Energiespeicher 1 eine Interkonnektorplatte 13, die an ihrer Unterseite 13a Kontaktstege 14 aufweist. Durch die an ihrer Unterseite 13a kammartige Struktur der Interkonnektorplatte 13 sind Luftkanäle gebildet.

An die Unterseite 13a der Interkonnektorplatte 13 grenzt eine Elektroden-Elektrolyt-Einheit 11 an. Die Elektroden-Elektrolyt-Einheit 11 besteht aus einer an die Kontaktstege 14 der Interkonnektorplatte 13 angrenzenden positiven Elektrode 4, einem Elektrolyt 3 sowie einer negativen Elektrode 2. An die Unterseite der negativen Elektrode 2 grenzt ein Speicherelement 6 an. Zwischen der negativen Elektrode 2 und dem Speicherelement 6 ist eine poröse Kontaktschicht 17a aufgebracht. Ferner ist eine Kontaktschicht 17b zwischen dem Speicherelement 6 und der Interkonnektorplatte 13 aufgebracht. Die Kontaktschicht 17b muss nicht porös sein.

Figur 3 zeigt einen Ausschnitt eines ein Speicherelement 6 umfassenden Energiespeichers 1. Anhand der Darstellung gemäß Figur 3 ist der spezielle Aufbau des Speicherelements 6 ersichtlich.

Bei dem Speicherelement 6 handelt es sich um ein im Wesentlichen platten- oder quaderförmiges Bauteil. Die platten- oder quaderförmige Ausbildung des Speicherelements 6 ist deshalb vorteilhaft, da derart eine besonders gute Krafteinleitung, d. h. bezogen auf Figur 3 insbesondere die Einleitung vertikal wirkender Kräfte, in die an die negative Elektrode 2 angrenzende Fläche des Speicherelements 6, welche in Figur 3 der Oberseite des Speicherelements 6 entspricht, und in an die Interkonnektorplatte 13 angrenzende Fläche des Speicherelements 6, welche in Figur 3 der Unterseite des Speicherelements 6 entspricht, möglich ist. Das Speicherelement 6 dient deshalb neben der Speicherung elektrischer Energie auch als ein mechanisches Stützelement innerhalb eines aus mehreren übereinander angeordneten Energiespeichern 1 gebildeten Stapels bzw. innerhalb einer mehrere übereinander angeordnete Energiespeicher 1 aufweisenden Energiespeicheranordnung.

Das Speicherelement 6 umfasst einen porösen Speicherelementkörper, welcher im Wesentlichen aus Partikeln des Speichermaterials 15, d. h. z. B. eines partikulären Eisen-Eisenoxid-Gemisches gebildet ist. Die Porosität des das Speicherelement 6 bildenden Speicherelementkörpers liegt z. B. im Bereich von 30% im entladenen bzw. oxidierten Zustand des Speichermaterials 15.

In dem Speicherelementkörper, d. h. zwischen den Partikeln des Speichermaterials 15 sind ferner, schematisch als Dreiecke dargestellte, inerte Partikel 16 aus Zirkoniumoxid verteilt. Die inerten Partikel 16 dienen als "Abstandshalter" und verhindern bzw. hemmen eine Absenkung der Gasdurchlässigkeit durch Versinterung des Speichermaterials 15.

In dem Speicherelementkörper sind mehrere Durchgangskanäle 18 ausgebildet. Die Durchgangskanäle 18 durchbrechen die poröse Struktur des Speicherelements 6 bzw. Speicherelementkörpers im Sinne von Bohrungen. Die Durchgangskanäle 18 unterscheiden sich insbesondere in den geometrischen Abmessungen, wie z. B. Durchmesser und/oder Länge, sowie der Form von in dem Speicherelementkörper aufgrund dessen poröser Struktur möglicherweise bereits vorhandenen kanalartigen Strukturen. Letztere können gegebenenfalls als Mikrokanäle, die Durchgangskanäle 18 entsprechend als Makrokanäle bezeichnet werden. Der mittlere Durchmesser eines entsprechenden Durchgangskanals 18 liegt beispielsweise im Bereich von 10 µm bis 2 mm.

Die Durchgangskanäle 18 ermöglichen einen einfachen und schnellen diffusiven Gastransport, insbesondere des gasförmigen Redoxpaares in Form des Wasserstoff-Wasserdampf-Gemischs, durch das Speicherelement 6.

Die Durchgangskanäle 18 erstrecken sich in vertikaler Richtung durch das Speicherelement 6 respektive den Speicherelementkörper. Die Erstreckung der Durchgangskanäle reicht von der der negativen Elektrode 2 zugewandten Oberfläche des Speicherelementkörpers bis zu der der Interkonnektorplatte 13 zugewandten Oberfläche des Speicherelementkörpers. Die Durchgangskanäle 18 durchsetzen den Speicherelementkörper damit vollständig. Die oder ein Teil der Durchgangskanäle 18 können miteinander unter Ausbildung eines zwei- oder dreidimensionalen Netzwerks kommunizieren.

Um gleichermaßen eine elektrische Kontaktierung des Speicherelements 6 mit den an dieses angrenzend bzw. benachbart angeordneten Komponenten des Energiespeichers 1, d. h. der oberseitig des Speicherelements 6 angeordneten negativen Elektrode 2 sowie der unterseitig des Speicherelements 6 angeordneten Interkonnektorplatte 13, zu ermöglichen, sind die die Durchgangskanäle 18 begrenzenden Wandabschnitte bzw. Wandungen mit einer elektrisch leitfähigen Beschichtung 19 versehen. Die elektrisch leitfähige Beschichtung 19 ist porös, sofern sie auch dem Gastransport in die Tiefe des Speicherelements 6 und nicht nur der elektrischen Kontaktierung zwischen negativer Elektrode 2 und Interkonnektorplatte 13 dienen soll.

Die elektrisch leitfähige Beschichtung 19 ist beispielsweise aus einem metallischen Material, insbesondere einem Elementarmetall, bevorzugt Cr, Co, Ni, Cu, Ag, oder einer Metalllegierung, bevorzugt auf Basis von Cr, Co, Cu, Ni, Ag oder Fe, besonders bevorzugt X1CrTiLa22, FeCr22, 1C44Mo20, oder einer elektrisch leitfähigen Oxidverbindung, insbesondere auf Basis von Cr₂O₃, In₂O₃, MnₓO_{y} oder TiO₂ oder einer Perowskitverbindung, bevorzugt der allgemeinen Form (RE,AE)(Fe, Ti, Cr, Mn, Ni)O₃, besonders bevorzugt aus den Kompositionsfeldern (Sr, Y)TiO₃ oder (La, Ca, Sr, Ce)(Fe, Ti, Cr)O₃, oder einer Mischung der Genannten gebildet.

Die Schichtdicke der elektrisch leitfähigen Beschichtung 19 liegt z. B. im Bereich von 2 µm - 0,5 mm.

Wie bereits mit Bezug auf Figur 2 erwähnt, sind auf dem Speicherelement 6 ober- und unterseitig, d. h. sowohl auf der der negativen Elektrode 2 zugewandten Seite als auch auf der der Interkonnektorplatte 13 zugewandten Seite jeweils vollflächig Kontaktschichten 17a, 17b aus einem elektrisch leitfähigen Material aufgebracht. Die Kontaktschichten 17a, 17b dienen der Reduzierung der Kontaktwiderstände zwischen dem Speicherelement 6 und der negativen Elektrode 2 als auch der Interkonnektorplatte 13. Gleichermaßen vergleichmäßigen bzw. ebnen die Kontaktschichten 17a, 17b die aufgrund der Restwelligkeit bzw. der zellularen bzw. porösen Struktur des Speicherelements 6 inhomogene Druckverteilung auf das Speicherelement 6 und auf die mechanisch nur begrenzt belastbare Elektroden-Elektrolyt-Einheit 11.

Die Kontaktschichten 17a, 17b sind vorteilhaft aus demselben Material wie die Beschichtung 19 gebildet. Beispielsweise sind die Kontaktschichten 17a, 17b sonach aus Nickel oder einer Nickellegierung gebildet.

Die oberseitig auf das Speicherelement 6 aufgebrachte Kontaktschicht 17a weist eine offene Porosität von ca. 30% auf, um den Gasdurchtritt für das gasförmige Redoxpaar, z.B. ein Wasserstoff-Wasserdampf-Gemisch, zwischen dem Speicherelement 6 und der angrenzenden negativen Elektrode 2 nicht zu behindern.

Bei der konkreten Auslegung des Speicherelements 6 sowie der gegebenenfalls auf dieses aufzubringenden Kontaktschichten 17a, 17b ist insbesondere der Kontaktwiderstand zwischen dem Speicherelement 6 bzw. der Kontaktschicht 17b und der an dieses angrenzenden Interkonnektorplatte 13, der Kontaktwiderstand zwischen dem Speicherelement 6 bzw. der Kontaktschicht 17a und der an dieses angrenzenden negativen Elektrode 2, sowie der Widerstand der elektrisch leitfähigen Beschichtung 19 in den Durchgangskanälen 18 des Speicherelements 6 bzw. der Kontaktschichten 17a, 17b zu berücksichtigen. Ferner ist darauf zu achten, dass das Speicherelement 6 derart stabil ist, dass es die beim Zusammenbau des Energiespeichers 1 bzw. eines eine Energiespeicheranordnung bildenden Stapels aus einzelnen Energiespeichern 1 auftretenden Kräfte, insbesondere Druckkräfte, wie sie insbesondere unter dem Andruck der Interkonnektorplatte 13 entstehen, aushält.

Die Herstellung des Speicherelements 6 kann beispielsweise durch ein uniaxiales oder isostatisches Pressverfahren eines Partikelgemisches aus dem partikelförmigen Speichermaterial 15, den inerten Partikeln 16 sowie gegebenenfalls Poren- bzw. Zellbildnern erfolgen. Denkbar sind auch Extrusionsverfahren, Spritzgießverfahren, Gießverfahren sowie Laminierverfahren mit anschließender Sinterung.

Die Kontaktschichten 17a, 17b können auf das Speicherelement 6 z. B. durch Auflaminieren im Sinne einer Grünfolie aufgebracht werden. Alternativ kann die Aufbringung der Kontaktschichten 17a, 17b auf das Speicherelement 6 auch über Siebdruck-, Sprüh-, Aerosoldepositions- oder Tauchverfahren erfolgen. Analog dazu können die Kontaktschichten 17a, 17b auf die negative Elektrode 2 und die Interkonnektorplatte 13 aufgebracht werden.

Mithin ist das Speicherelement 6 samt der gegebenenfalls auf dieses aufgebrachten Kontaktschichten 17a, 17b großtechnisch, reproduzierbar, flexibel und kostengünstig herstellbar.

Insgesamt ermöglicht der erfindungsgemäße Energiespeicher 1 eine Erhöhung des spezifischen Speicherelementvolumens pro Stapelvolumen und damit eine Erhöhung der Energie- und Leistungsdichte.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung wie sie in den Ansprüchen offenbart ist zu verlassen.

## Patentansprüche

1. Wiederaufladbarer elektrischer Energiespeicher (1), insbesondere Metall-Luft-Energiespeicher, mit wenigstens einem Speicherelement (6) zur Speicherung elektrischer.Energie, wobei das Speicherelement (6) einen porösen Speicherelementkörper umfasst, **dadurch gekennzeichnet, dass** in dem Speicherelementkörper wenigstens ein Durchgangskanal (18) ausgebildet ist, wobei die den Durchgangskanal (18) begrenzenden Wandabschnitte des Speicherelementkörpers zumindest abschnittsweise mit einem elektrisch leitfähigen Material beschichtet sind, wobei das Speicherelement (6) zwischen einer Elektrode (2) und einem zum Verbinden des wiederaufladbaren elektrischen Energiespeichers (1) mit einem weiteren wiederaufladbaren elektrischen Energiespeicher ausgebildeten elektrischen Verbindungselement angeordnet ist, wobei der wenigstens eine Durchgangskanal (18) den Speicherelementkörper von der der Elektrode (2) zugewandten Oberfläche bis zu der dem elektrischen Verbindungselement zugewandten Oberfläche durchsetzt.

2. Wiederaufladbarer elektrischer Energiespeicher nach Anspruch 1, **dadurch gekennzeichnet, dass** sich der wenigstens eine Durchgangskanal (18) von wenigstens einer Fläche des Speicherelementkörpers wenigstens bis zu einer dieser gegenüber liegenden Fläche des Speicherelementkörpers erstreckt.

3. Wiederaufladbarer elektrischer Energiespeicher nach einem der vorangehenden Ansprüche, **dadurch gekennzeichnet, dass** der Durchmesser des wenigstens einen Durchgangskanals (18) entlang dessen Erstreckung konstant ist oder sich, insbesondere graduell, ändert.

4. Wiederaufladbarer elektrischer Energiespeicher nach einem der vorangehenden Ansprüche, **dadurch gekennzeichnet, dass** in dem Speicherelementkörper mehrere, zumindest teilweise miteinander kommunizierende Durchgangskanäle (18) ausgebildet sind.

5. Wiederaufladbarer elektrischer Energiespeicher nach einem der vorangehenden Ansprüche, **dadurch gekennzeichnet, dass** das die Beschichtung der Wandabschnitte bildende elektrisch leitfähige Material aus einem metallischen Material, insbesondere einem Elernentarmetall, bevorzugt Cr, Co, Ni, Cu, Ag, oder einer Metalllegierung, bevorzugt auf Basis von Cr, Co, Cu, Ni, Ag oder Fe, besonders bevorzugt X1CrTiLa22, FeCr22, 1C44Mo20, oder einer elektrisch leitfähigen Oxidverbindung, insbesondere auf Basis von Cr₂O₃, In₂O₃, MnₓO_{y} oder TiO₂ oder einer Perowskitverbindung, bevorzugt der allgemeinen Form (RE,AE)(Fe, Ti, Cr, Mn, Ni)O₃, besonders bevorzugt aus den Kompositionsfeldern (Sr, Y)TiO₃ oder (La, Ca, Sr, Ce)(Fe, Ti, Cr)O₃, oder einer Mischung der Genannten gebildet ist.

6. Wiederaufladbarer elektrischer Energiespeicher nach einem der vorangehenden Ansprüche, **dadurch gekennzeichnet, dass** in dem Speicherelement zusätzlich Partikel (16) aus einem inerten Material, insbesondere einer Oxidverbindung, insbesondere auf Basis von Zirkonium und/oder Yttrium, enthalten sind.

7. Wiederaufladbarer elektrischer Energiespeicher nach einem der vorangehenden Ansprüche, **dadurch gekennzeichnet, dass** das Speicherelement (6) zwischen einer Elektrode (2) und einem zum Verbinden des wiederaufladbaren elektrischen Energiespeichers (1) mit einem weiteren wiederaufladbaren elektrischen Energiespeicher ausgebildeten elektrischen Verbindungselement angeordnet ist, wobei zumindest auf der der Elektrode zugewandten Oberfläche des Speicherelements (6) zumindest abschnittsweise, insbesondere vollflächig, eine elektrisch leitfähige Kontaktschicht (17a, 17b) aufgebracht ist.

8. Wiederaufladbarer elektrischer Energiespeicher nach Anspruch 7, **dadurch gekennzeichnet, dass** zumindest die auf der der Elektrode (2) zugewandten Oberfläche des Speicherelements (6) aufgebrachte elektrisch leitfähige Kontaktschicht (17a) porös ist.

9. Wiederaufladbarer elektrischer Energiespeicher nach Anspruch 8, **dadurch gekennzeichnet, dass** die Kontaktschicht (17a, 17b) aus einem metallischen Material, insbesondere einem Elementarmetall, bevorzugt Cr, Co, Ni, Cu, Ag, oder einer Metalllegierung, bevorzugt auf Basis von Cr, Co, Cu, Ni, Ag oder Fe, besonders bevorzugt X1CrTiLa22, FeCr22, 1C44Mo20, oder einer elektrisch leitfähigen Oxidverbindung, insbesondere auf Basis von Cr₂O₃, In₂O₃, MnₓO_{y} oder TiO₂ oder einer Perowskitverbindung, bevorzugt der allgemeinen Form (RE,AE)(Fe, Ti, Cr, Mn, Ni)O₃, besonders bevorzugt aus den Kompositionsfeldern (Sr, Y)TiO₃ oder (La, Ca, Sr, Ce) (Fe, Ti, Cr)O₃, oder einer Mischung der Genannten gebildet ist.

10. Energiespeicheranordnung, umfassend mehrere, insbesondere stapelartig, miteinander verbundene wiederaufladbare elektrische Energiespeicher (1) gemäß einem der vorangehenden Ansprüche 1 - 9.

## Claims

1. Rechargeable electric energy store (1), in particular metal-air energy store, having at least one storage element (6) for storing electric energy, where the storage element (6) comprises a porous storage element body, **characterized in that** the storage element body has at least one through-channel (18), where the wall sections of the storage element body bounding the through-channel (18) are coated at least in sections with an electrically conductive material, where the storage element (6) is arranged between an electrode (2) and an electrical connecting element configured for connecting the rechargeable electric energy store (1) with a further rechargeable electric energy store, where the at least one through-channel (18) runs through the storage element body from the surface facing the electrode (2) to the surface facing the electrical connecting element.

2. Rechargeable electric energy store according to Claim 1, **characterized in that** the at least one through-channel (18) extends from at least one face of the storage element body at least to a face of the storage element body located opposite this first face.

3. Rechargeable electric energy store according to either of the preceding claims, **characterized in that** the diameter of the at least one through-channel (18) is constant along its extension or changes, in particular gradually.

4. Rechargeable electric energy store according to any of the preceding claims, **characterized in that** the storage element body has a plurality of through-channels (18) which at least partially communicate.

5. Rechargeable electric energy store according to any of the preceding claims, **characterized in that** the electrically conductive material forming the coating of the wall sections is made of a metallic material, in particular an elemental metal, preferably Cr, Co, Ni, Cu, Ag, or a metal alloy, preferably based on Cr, Co, Cu, Ni, Ag or Fe, particularly preferably X1CrTiLa22, FeCr22, 1C44Mo20, or an electrically conductive oxide compound, in particular based on Cr₂O₃, In₂O₃, MnₓO_{y} or TiO₂ or a perovskite compound, preferably of the general formula (RE,AE) (Fe, Ti, Cr, Mn, Ni)O₃, particularly preferably from the composition fields (Sr, Y)TiO₃ or (La, Ca, Sr, Ce) (Fe, Ti, Cr)O₃ or a mixture of the above-mentioned.

6. Rechargeable electric energy store according to any of the preceding claims, **characterized in that** particles (16) composed of an inert material, in particular an oxide compound, in particular based on zirconium and/or yttrium, are additionally present in the storage element.

7. Rechargeable electric energy store according to any of the preceding claims, **characterized in that** the storage element (6) is arranged between an electrode (2) and an electrical connecting element configured for connecting the rechargeable electric energy store (1) with a further rechargeable electric energy store, where an electrically conductive contact layer (17a, 17b) has been applied at least on the surface of the storage element (6) facing the electrode, at least in sections, in particular over the full area.

8. Rechargeable electric energy store according to Claim 7, **characterized in that** at least the electrically conductive contact layer (17a) applied to the surface of the storage element (6) facing the electrode (2) is porous.

9. Rechargeable electric energy store according to Claim 8, **characterized in that** the contact layer (17a, 17b) is made of a metallic material, in particular an elemental metal, preferably Cr, Co, Ni, Cu, Ag, or a metal alloy, preferably based on Cr, Co, Cu, Ni, Ag or Fe, particularly preferably X1CrTiLa22, FeCr22, 1C44Mo20, or an electrically conductive oxide compound, in particular based on Cr₂O₃, In₂O₃, MnₓO_{y} or TiO₂ or a perovskite compound, preferably of the general formula (RE,AE) (Fe, Ti, Cr, Mn, Ni)O₃, particularly preferably from the composition fields (Sr, Y)TiO₃ or (La, Ca, Sr, Ce) (Fe, Ti, Cr)O₃ or a mixture of the above-mentioned.

10. Energy store arrangement comprising a plurality of rechargeable electric energy stores (1) according to any of Claims 1-9 which are connected to one another, in particular in the manner of a stack.

## Revendications

1. Accumulateur (1) d'énergie électrique rechargeable, notamment accumulateur d'énergie métal-air ayant au moins un élément (6) d'accumulateur pour accumuler de l'énergie électrique, l'élément (6) d'accumulateur comprenant un corps poreux d'élément accumulateur, **caractérisé en ce qu'**au moins un canal (18) de traversée est constitué dans le corps de l'élément d'accumulateur, les parties de paroi, délimitant le canal (18) de traversée, du corps de l'élément d'accumulateur étant revêtues au moins par section d'un matériau conducteur de l'électricité, l'élément (6) d'accumulateur étant disposé entre une électrode (2) et un élément de liaison électrique constitué pour relier l'accumulateur (1) d'énergie électrique rechargeable à un autre accumulateur d'énergie électrique rechargeable, le au moins canal (18) traversant le corps de l'élément d'accumulateur de la surface tournée vers l'électrode jusqu'à la surface tournée vers l'élément de liaison électrique.

2. Accumulateur d'énergie électrique rechargeable suivant la revendication 1, **caractérisé en ce que** le au moins un canal (18) de traversée s'étend d'au moins une surface du corps de l'élément de l'accumulateur au moins jusqu'à une surface qui lui est opposée du corps de l'élément de l'accumulateur.

3. Accumulateur d'énergie électrique rechargeable suivant l'une des revendications précédentes, **caractérisé en ce que** le diamètre du au moins un canal (18) de traversée est constant le long de son étendue ou se modifie notamment graduellement.

4. Accumulateur d'énergie électrique rechargeable suivant l'une des revendications précédentes, **caractérisé en ce que** plusieurs canaux (18) de traversée communiquant entre eux, au moins en partie, sont constitués dans le corps de l'élément d'accumulateur.

5. Accumulateur d'énergie électrique rechargeable suivant l'une des revendications précédentes, **caractérisé en ce que** le matériau conducteur de l'électricité formant le revêtement des parties de paroi est en un matériau métallique, notamment en un métal élémentaire, de préférence en Cr, Co, Ni, CU, Ag ou en un alliage métallique, de préférence à base de Cr, Co, Cu, Ni, Ag ou Fe, en étant de préférence X1CrTiLa22, FeCr22, 1C44Mo20, ou un oxyde conducteur de l'électricité, notamment à base de Cr₂O₃, In₂O₃, MnₓO_{y} ou TiO₂ ou d'un composé perowskite, de préférence de formule générale (RE,AE)(Fe, Ti, Cr, Mn, Ni)O₂, d'une manière particulièrement préférée dans les champs de composition (Sr, Y)TiO₃ ou (La, Ca, Sr, Ce) (Fe, Ti, Cr)O₃, ou un mélange des matériaux mentionnés.

6. Accumulateur d'énergie électrique rechargeable suivant l'une des revendications précédentes, **caractérisé en ce que** dans l'élément de l'accumulateur sont contenus en outre des particules (16) en un matériau inerte, notamment en un oxyde, notamment à base de zirconium et/ou d'yttrium.

7. Accumulateur d'énergie électrique rechargeable suivant l'une des revendications précédentes, **caractérisé en ce que** l'élément (6) d'accumulateur est disposé entre une électrode (2) et un élément de liaison électrique constitué pour la liaison de l'accumulateur (1) d'énergie électrique rechargeable à un autre accumulateur d'énergie électrique rechargeable, une couche (17a , 17b) de contact conductrice de l'électricité étant déposée au moins par endroit, notamment sur toute la surface sur la surface de l'élément (6) de l'accumulateur tournée vers l'électrode.

8. Accumulateur d'énergie électrique rechargeable suivant la revendication 7, **caractérisé en ce qu'**au moins la couche (14a) de contact conductrice de l'électricité et déposée sur la surface, tournée vers l'électrode (2), de l'élément (6) d'accumulateur, est poreuse.

9. Accumulateur d'énergie électrique rechargeable suivant la revendication 8, **caractérisé en ce que** la couche (17a , 17b) de contact est en un matériau métallique, notamment en un métal élémentaire, de préférence en Cr, Co, Ni, CU, Ag ou en un alliage métallique, de préférence à base de Cr, Co, Cu, Ni, Ag ou Fe, en étant de préférence X1CrTiLa22, FeCr22, 1C44Mo20, ou un oxyde conducteur de l'électricité notamment à base de Cr₂O₃, In₂O₃, MnₓO_{y} ou TiO₂ ou d'un composé perowskite, de préférence de formule générale (RE,AE)(Fe, Ti, Cr, Mn, Ni)O₂, d'une manière particulièrement préférée dans les champs de composition (Sr, Y)TiO₃ ou (La, Ca, Sr, Ce) (Fe, Ti, Cr)O₃, ou un mélange des matériaux mentionnés.

10. Agencement d'accumulateur d'énergie comprenant plusieurs, notamment de type empilé, accumulateurs (1) d'énergie électrique rechargeables reliés entre eux selon l'une des revendications précédentes 1 à 9.
